# EUROPÄISCHE PATENTSCHRIFT

(11) **EP 1 904 352 B1**
(45) Veröffentlichungstag und Bekanntmachung des Hinweises auf die Patenterteilung: **26.09.2012**
(21) Anmeldenummer: 06763320.6
(22) Anmeldetag: 29.05.2006
(51) Int. Cl.: B60T 7/22, G08G 1/14, B60T 7/12, B60Q 1/48

(54) **VERFAHREN UND SYSTEM ZUR UNTERSTÜTZUNG DES FAHRERS EINES KRAFTFAHRZEUGS BEI DER ERKENNUNG VON FÜR DAS FAHRZEUG GEEIGNETEN PARKLÜCKEN**
METHOD AND SYSTEM FOR ASSISTING A DRIVER OF A MOTOR VEHICLE IN IDENTIFYING SUITABLE PARKING SPACES FOR THE VEHICLE
PROCEDE ET SYSTEME POUR AIDER UN CONDUCTEUR DE VEHICULE AUTOMOBILE A IDENTIFIER DES EMPLACEMENTS DE STATIONNEMENT LIBRES DESTINES AUDIT VEHICULE

(30) Priorität: 08.07.2005 DE 102005032096
(43) Veröffentlichungstag der Anmeldung: 02.04.2008
(73) Patentinhaber: ROBERT BOSCH GMBH, 70442 Stuttgart (DE)
(72) Erfinder: RIEGEL, Thilo, 70180 Stuttgart (DE)
(86) Internationale Anmeldenummer: PCT/EP2006/062661
(87) Internationale Veröffentlichungsnummer: WO 2007/006605

(56) Entgegenhaltungen:
- EP-A- 1 298 451
- DE-A1- 10 220 426
- DE-A1- 10 223 269
- DE-A1- 10 232 295
- DE-A1- 10 256 770
- US-B1- 6 265 968

## Beschreibung

### Stand der Technik

Die vorliegende Erfindung betrifft ein Verfahren zur Unterstützung des Fahrers eines Fahrzeugs bei der Erkennung von für das Fahrzeug geeigneten Parklücken, wobei mittels einer Messeinheit potentielle Parklücken bei einer Vorbeifahrt des Fahrzeugs erfasst werden und die Länge und/oder Tiefe bzw. Breite einer erfassten Parklücke ermittelt wird.

Die zunehmende Verkehrsdichte und verstärkte Bebauung freier Flächen engen den Verkehrsraum insbesondere in Ballungszentren kontinuierlich ein. Der zur Verfügung stehende Parkraum wird enger, und die Suche nach einer geeigneten Parklücke belastet den Fahrer zusätzlich zum stetig steigenden Verkehrsaufkommen. Insbesondere beim rückwärtigen Einparken in eine Parklücke ist es oft mit erheblichen Schwierigkeiten verbunden, die genaue Größe und Lage der Parklücke richtig einzuschätzen. Dabei sind sich viele Fahrer oftmals nicht sicher, ob ihr Fahrzeug in eine gefundene Parklücke hineinpasst, die zwischen abgestellten Fahrzeugen oder anderen Hindernissen gebildet wird.

Zur Entlastung des Fahrers eines Fahrzeugs beim Einparken sind unterschiedlichste Vorrichtungen und Systeme bekannt. Es wurden beispielsweise Parkpiloten zur Abstandserkennung von die Parklücke begrenzenden Objekten im hinteren und vorderen Fahrzeugbereich (PDC = Park Distance Control), Parklückenvermessungssysteme (PLV bzw. PSM = Parking Space Measurement) sowie semiautonome oder vollautonome Parkassistenten vorgeschlagen.

So sind bereits mehrere Verfahren und Systeme zur Unterstützung des Fahrers bei der Ermittlung von geeigneten Parklücken mittels Parklückenvermessung beispielsweise aus der DE 102 58 310 A1, DE 103 20 723 A1 oder aus der DE 102 57 722 A1 bekannt. Bei einem Einparkvorgang ist es zunächst eine wesentliche Aufgabe des Fahrers, abzuschätzen, ob eine potentielle Parklücke für ein Einparken mit seinem Fahrzeug in Länge und Tiefe bzw. Breite ausreichend groß ist und ob das Fahrzeug somit sicher in diese Parklücke eingeparkt werden kann. Zur Erleichterung dieser Abschätzung wird ein Parklückenvermessungssystem (PLV bzw. PSM) eingesetzt, das einer Vermessung der Parklückenabmaße insbesondere zwischen zwei parkenden Fahrzeugen dient. Dazu erfassen berührungslos arbeitende Abstandssensoren, die vorzugsweise durch Ultraschallsensoren, aber beispielsweise auch durch Infrarot- oder Radarsensoren gebildet sein können, bei einer Vorbeifahrt an einer potentiellen Parklücke zunächst ein erstes stehendes Hindernis, dann über eine gewisse Wegstrecke eine zumindest im wesentlichen hindernisfreie mögliche Parklücke und nachfolgend ein zweites stehendes Hindernis. Anschließend kann dem Fahrer die so ermittelte Länge und/oder Tiefe der soeben vermessenen Lücke und/oder eine hieraus abgeleitete Information darüber angegeben werden, ob sein Fahrzeug in diese Lücke zwischen den Hindernissen hineinpasst.

Auch aus der DE 197 03 517 A1 sind ein Verfahren und eine Vorrichtung zur Unterstützung des Fahrers beim Einparken in eine Parklücke nach deren Vermessung bekannt. Dazu können die erforderlichen Steuereingriffe entweder dem Fahrer angezeigt oder als Parkassistent (PSC = Park Steering Control) auch automatisch durchgeführt werden. Der Start des Parkvorganges erfolgt dabei erst, nachdem der Fahrer ein entsprechendes Bestätigungssignal eingegeben hat. Ferner ist es auch bekannt, den Parkvorgang entweder unmittelbar im Anschluss an die Vermessung zu starten, oder den Parkvorgang dann zu beginnen wenn aufgrund der Fahrbedingungen des Fahrzeugs auf einen Einparkwunsch des Fahrer geschlossen werden kann, was beispielsweise daraus abgeleitet werden kann, dass der Fahrer das Fahrzeug anhält.

Ferner ist aus der DE 38 13 083 A1 eine automatische Einparkeinrichtung für Kraftfahrzeuge bekannt, bei der potentielle Parklücken während der Vorbeifahrt vermessen werden und ein Signal erzeugt wird, wenn eine Parklücke ausreichend groß für einen Einparkvorgang ist. Auch hier können zur Durchführung des Einparkvorgangs Signale erzeugt werden, welche entweder in einer Anzeigeeinrichtung angezeigt werden, um dem Fahrer Instruktionen zu notwendigen Einparkbewegungen anzuzeigen, oder welche die Antriebsmechanismen des Fahrzeuges mittels Steuereinrichtungen steuern, um den gewünschten Antrieb zu erzielen. Bezüglich des Starts des Parkvorganges ist dabei vorgesehen, dass die Daten zum Steuern des Fahrzeugs einen Stopppunkt enthalten können, an dem die Vorwärtsfahrt des Fahrzeugs gestoppt wird und die Rücksetzbewegung des Parkvorganges beginnt.

Ein Verfahren gemäß dem Oberbegriff der Ansprüche 1 und 6 ist aus der DE 102 32 295 A1 bekannt.

Der Fahrer hat jedoch bei allen vorbekannten Verfahren und Systemen zur Unterstützung bei der Suche nach geeigneten Parklücken noch bestimmte Aufgaben selber auszuführen, die mit verschiedenen Schwierigkeiten verbunden sind. So muss der Fahrer insbesondere stets selbst aktiv werden, um das Fahrzeug anzuhalten, damit ein unterstützter Parkvorgang beginnen kann. Dies bereitet Probleme, da er einerseits möglichst schnell reagieren muss, um nicht zu weit zurücksetzen zu müssen. Andererseits muss er jedoch ausreichend vorsichtig abbremsen, um keinen Auffahrunfall durch nachfolgende Fahrzeuge zu provozieren.

Außerdem muss der Fahrer selbst darauf achten, eine vom System vorgegebene maximal zulässige Geschwindigkeit nicht zu überschreiten, da oberhalb dieser Geschwindigkeit eine sichere und fehlerfreie Erfassung und Vermessung einer Parklücke nicht gewährleistet ist. Dies ist unter anderem auch durch die physikalischen Grenzen der üblicherweise verwendeten Ultraschallsensoren bedingt, die eine zuverlässige Aussage über geeignete Parklücken ohne weiteres nur bei einer maximalen Geschwindigkeit von etwa 20 km/h bzw. bei jeweils entsprechenden maximalen Geschwindigkeiten bei anderen Sensor-Typen gestatten. Der Fahrer muss also ständig darauf achten, dass er die maximal vom System unterstützte Geschwindigkeit, die außerdem noch von Umweltbedingungen wie beispielsweise Wetter, Nässe, Umgebungslärm und/oder Randbebauung abhängen kann, nicht überschreitet, wenn er vermeiden möchte, dass geeignete Parklücken ungenutzt passiert werden oder dass Parklücken zu unrecht als geeignet signalisiert werden. Dies ist gerade bei geringen Geschwindigkeiten über längere Strecken sehr mühsam.
Bei der Suche nach geeigneten Parklücken wäre daher eine noch stärkere Unterstützung des Fahrers wünschenswert.

Die der vorliegenden Erfindung zugrunde liegende Problematik besteht allgemein darin, ein verbessertes Verfahren bzw. Fahrerassistenzsystem der eingangs genannten Art zu schaffen, das den Fahrer weitergehend bei der Erkennung von für das Fahrzeug geeigneten Parklücken unterstützt und Schwierigkeiten beim Auffinden geeigneter Parklücken minimiert oder sogar vermeidet.

### Vorteile der Erfindung:

Das erfindungsgemäße Verfahren gemäß Anspruch 1 weist gegenüber vorbekannten Verfahren und Systemen den Vorteil auf, dass der Fahrer nicht mehr selbst das Abbremsen des Fahrzeugs einleiten muss.

Die der vorliegenden Erfindung zugrunde liegende Idee besteht darin, dass eine erfasste Parklücke in Abhängigkeit von der ermittelten Länge und/oder Tiefe daraufhin bewertet wird, ob ein Einparken des Fahrzeugs in diese erfasste Parklücke möglich ist, und dass das Fahrzeug, insbesondere der Antrieb und/oder Bremsmittel des Fahrzeugs, vermittels einer Steuerungs- und/oder Regelungseinheit derart gesteuert oder geregelt wird, dass das Fahrzeug automatisch abgebremst wird, wenn die Bewertung einer erfassten Parklücke ergibt, dass das Fahrzeug in diese Parklücke eingeparkt werden kann. Wesentlich ist es dabei, dass nach dem Erfassen einer vor allem in der Länge und vorzugsweise auch in der Tiefe bzw. Breite ausreichend großen Parklücke die Geschwindigkeit des Fahrzeugs automatisch reduziert wird und dem Fahrer durch das Abbremsen signalisiert wird, dass eine geeignete Parklücke gefunden wurde.

Die Vorteile sind dabei insbesondere in einer Entlastung des Fahrers zu sehen, da er den Bremsvorgang nach der Signalisierung einer geeigneten Parklücke nicht mehr selbst starten muss. Das bedeutet, dass sich der Fahrer mehr auf den Straßenverkehr als auf die Signalisierung einer geeigneten Parklücke konzentrieren kann, was einer Erhöhung der Verkehrssicherheit zugute kommt. Durch die Einleitung einer automatischen Abbremsung des Fahrzeugs wird außerdem eine Verkürzung der Wegstrecke bzw. der Zeit erreicht, innerhalb der das Fahrzeug nach dem automatischen Start eines Abbremsvorganges vom Fahrer oder vom System zum vollständigen Stillstand gebracht werden kann.

Vorteilhafte Weiterbildungen und Verbesserungen dieses erfindungsgemäßen Verfahrens ergeben sich aus den abhängigen Ansprüchen 2 bis 5.

So ist es besonders vorteilhaft, wenn das Fahrzeug automatisch bis in den Stillstand abgebremst wird. In diesem Fall braucht der Fahrer überhaupt nicht mehr in den Abbremsvorgang einzugreifen, sondern er muss nach dem vollständigen Stillstand des Fahrzeugs nur noch entscheiden, ob er die als geeignet bewertete Parklücke auch tatsächlich für einen Einparkvorgang nutzen möchte, der dann ohne weitere Unterstützung eines Systems oder beispielsweise von einem Parkassistenten weitergehend unterstützt durchgeführt werden kann. Grundsätzlich können die Vorteile des erfindungsgemäßen Verfahrens jedoch auch schon dann genutzt werden, wenn das Fahrzeug nur um eine gewisse Geschwindigkeitsreduzierung.und nicht bis zum vollständigen Stillstand abgebremst wird.

Eine für die Fahrzeuginsassen besonders komfortable Abbremsung kann dadurch erreicht werden, dass der Bremsvorgang derart ausgeführt wird, dass die Geschwindigkeit des Fahrzeugs entsprechend eines vorgegebenen Geschwindigkeitsverlaufes verringert wird. Dieser Geschwindigkeitsverlauf kann fest vorprogrammiert sein oder es können verschiedene Abbremsprofile vorgesehen sein, von denen der Fahrer ein gewünschtes Profil auswählen kann.

Besonders vorteilhaft ist es ferner, wenn der Abstand zu möglichen nachfolgenden Fahrzeugen und/oder zu vorausfahrenden Fahrzeugen oder Hindernissen erfasst und der Bremsvorgang in einer Abhängigkeit von einem gegebenenfalls erfassten Abstand ausgeführt wird. Dabei ist die Abhängigkeit vorzugsweise derart gestaltet, dass das Fahrzeug umso schwächer abgebremst wird, je geringer ein festgestellter Abstand zu einem nachfolgenden Fahrzeug und/oder je größer ein festgestellter Abstand zu einem vorausfahrenden Fahrzeug ist, und dass das Fahrzeug umso stärker abgebremst wird, je größer ein festgestellter Abstand zu einem nachfolgenden Fahrzeug und/oder je geringer ein festgestellter Abstand zu einem vorausfahrenden Fahrzeug oder zu einem sich vor dem Fahrzeug befindenden Hindernis ist. So kann im Falle der Erfassung eines Hindernisses vor dem Fahrzeug durch eine Verstärkung des Bremsvorganges eine drohende Kollision vermieden oder ein Aufprall minimiert werden. Auch kann eine maximale Abbremsung insbesondere dann eingeleitet bzw. ausgeführt werden, wenn kein nachfolgendes Fahrzeug festgestellt wird. Zur Ausführung von Bremsvorgängen in Abhängigkeit von erfassten Abständen wird das erfindungsgemäße Verfahren bzw. ein entsprechendes System vorteilhafterweise mit einem ACC (= Adaptive Cruise Control), ACC-FSR (= Adaptive Cruise Control Full Speed Range) bzw. ACC-stop-and-go oder einem anderen predicitven Safety System vernetzt.

Gemäß einer besonders bevorzugten Ausführungsform des erfindungsgemäßen Verfahrens ist vorgesehen, dass der Antrieb des Fahrzeugs derart gesteuert wird, dass das Fahrzeug nach einer automatischen Abbremsung wieder beschleunigt wird, sobald ein vom Fahrer einzugebendes Beschleunigungssignal vorliegt. Vorzugsweise wird das Fahrzeug dann wieder bis zu der Geschwindigkeit beschleunigt, mit der es unmittelbar vor der Einleitung der automatischen Abbremsung gefahren ist. Das Beschleunigungssignal kann beispielsweise durch die Betätigung eines Tasters und/oder durch die Betätigung des Gaspedals abgegeben werden. Auf diese Weise kann der Fahrer besonders leicht wieder in den Suchmodus zurückschalten und die Suche nach einer weiteren geeigneten Parklücke fortsetzen.

Das erfindungsgemäße Verfahren gemäß Anspruch 6 weist gegenüber vorbekannten Verfahren und Systemen den Vorteil auf, dass der Fahrer weitergehend unterstützt wird, indem er die Einhaltung der für eine sichere Erfassung geeigneter Parklücken maximal zulässigen Geschwindigkeit bei der Suche nicht mehr selbst kontrollieren muss.

Die der vorliegenden Erfindung zugrunde liegende Idee besteht dabei darin, dass das Fahrzeug, insbesondere der Antrieb und/oder Bremsmittel des Fahrzeugs, vermittels einer Steuerungs- und/oder Regelungseinheit derart gesteuert oder geregelt wird, dass eine Parklückensuchgeschwindigkeit des Fahrzeugs automatisch konstant gehalten wird, und dass dem Fahrer eine Information zu einer erfassten Parklücke gegeben wird. Diese Information kann beispielsweise in der Ausgabe eines bestimmten Signals oder in der Anzeige einer quantifizierten Längenangabe einer erfassten Parklücke bestehen. Eine Bewertung der Möglichkeiten eines Einparkvorganges ist hierbei nicht erforderlich.

Die Vorteile sind auch hierbei in einer Entlastung des Fahrers zu sehen, da er nicht mehr selbst darauf achten muss, dass die vom System vorgegebene oder ermittelte maximal zulässige Parklückensuchgeschwindigkeit nicht überschritten wird. Es wird somit automatisch dafür gesorgt, dass eine sichere Erfassung von Parklücken erfolgt und Fehler bei der Vermessung einer erfassten Parklücke aufgrund einer Geschwindigkeitsüberschreitung möglichst nicht auftreten. Das bedeutet erneut, dass sich der Fahrer mehr auf den Straßenverkehr als auf die Einhaltung einer bestimmten Höchstgeschwindigkeit konzentrieren kann, was wiederum die Verkehrssicherheit erhöht.

Vorteilhafte Weiterbildungen und Verbesserungen dieses erfindungsgemäßen Verfahrens ergeben sich aus den abhängigen Ansprüchen 7 bis 10.

So ist es hierbei besonders vorteilhaft, wenn die Parklückensuchgeschwindigkeit des Fahrzeugs automatisch eingestellt wird, sobald ein vom Fahrer ein entsprechendes Startsignal eingegeben bzw. betätigt wurde. Der Fahrer wird dann nicht nur von der Kontrolle über die Einhaltung, sondern auch von der Erreichung der zulässigen Höchstgeschwindigkeit entlastet. Dabei kann das Fahrzeug auch auf eine vom System als geeignet ermittelte Parklückensuchgeschwindigkeit geregelt werden, die insbesondere von Umwelteinflüssen wie beispielsweise Wetter, Nässe und/oder Umgebungslärm abhängen kann.

Vorzugsweise wird als Parklückensuchgeschwindigkeit die maximal mögliche Geschwindigkeit gewählt, bei der eine sichere und möglichst fehlerfrei Erfassung geeigneter Parklücken noch erfolgen kann. Es kann jedoch erfindungsgemäß auch vorgesehen sein, dass die Parklückensuchgeschwindigkeit vom Fahrer wahlweise vorgegeben bzw. ausgewählt werden kann. So kann der Fahrer beispielsweise eine eher sportliche oder eine eher komfortable oder vorteilhafterweise eine geringere Parklückensuchgeschwindigkeit wählen, wenn er eine höhere Sicherheit bei der Erfassung geeigneter Parklücken wünscht. Dabei kann die Geschwindigkeit entweder stufenlos oder in insbesondere drei Stufen abgestuft eingestellt werden.

Besonders vorteilhaft ist es ferner, wenn der Abstand zu möglichen vorausfahrenden Fahrzeugen oder vor dem Fahrzeug befindlichen Hindernissen erfasst wird und dass die Parklückensuchgeschwindigkeit reduziert wird, wenn ein bestimmter Mindestabstand unterschritten wird. Befindet sich beispielsweise vor dem Fahrzeug ein langsameres Objekt, so kann die Parklückensuchgeschwindigkeit reduziert und entsprechend angepasst werden. Dazu kann das Verfahren bzw. ein entsprechendes System vorteilhafterweise einen Frontsensor aufweisen und/oder mit einem ACC, ACC-FSR, ACC-stop-and-go oder einem anderen predicitven Safety System zusammenarbeiten bzw. mit diesem vernetzt sein, wodurch auch Stillstandsphasen überbrückt werden können, ohne dass das Verfahren unterbrochen wird bzw. ohne dass sich ein entsprechendes System abschaltet.

Obwohl eine Bewertung erfasster Parklücken auf Ihre Einparkeignung hier nicht unbedingt erforderlich ist, wird als vorteilhafte Ausgestaltung des erfindungsgemäßen Verfahrens vorgeschlagen, dass auch hierbei eine erfasste Parklücke unter Berücksichtigung der Fahrzeugabmessungen und in Abhängigkeit von der ermittelten Länge und/oder Tiefe daraufhin bewertet wird, ob ein Einparken des Fahrzeugs in diese erfasste Parklücke möglich ist, wobei dem Fahrer insbesondere nur dann ein Signal gegeben wird, wenn das Fahrzeug in die soeben erfasste Parklücke einparken kann. Besonders vorteilhaft ist es dabei, wenn die Bewertung in drei Stufen als gut oder als schlecht oder als überhaupt nicht möglich erfolgt und dementsprechend beispielsweise ein grünes oder gelbes oder rotes Signal optisch dargestellt werden kann.

Gemäß einer besonders bevorzugten Ausführungsform der Erfindung kann vorgesehen sein, dass der Antrieb des Fahrzeugs sowohl derart gesteuert oder geregelt wird, dass das Fahrzeug automatisch abgebremst wird, wenn die Bewertung einer erfassten Parklücke ergibt, dass das Fahrzeug in diese Parklücke eingeparkt werden kann, als auch derart gesteuert oder geregelt wird, dass eine Parklückensuchgeschwindigkeit des Fahrzeugs automatisch konstant gehalten bzw. eingeregelt wird. In diesem Fall erhält der Fahrer eine Information zu einer erfassten Parklücke durch die automatische Einleitung eines Abbremsvorganges des Fahrzeugs. Auf diese Weise wird eine besonders gute und vielseitige Unterstützung des Fahrers gewährleistet, da er sich selber weder auf die Einhaltung einer nicht zu hohen geeigneten Geschwindigkeit noch auf eine zügige und dennoch gefahrlose Abbremsung des Fahrzeugs konzentrieren muss. Selbstverständlich können dabei sämtliche der vorangehend beschriebenen vorteilhaften Weiterbildungen des erfindungsgemäßen Verfahrens für eine maximale Unterstützung des Fahrers einbezogen werden.

Die vorliegende Erfindung betrifft auch ein System, das zur Durchführung des erfindungsgemäßen Verfahrens geeignet ist.

Ein dem vorangehend beschriebenen Verfahren entsprechendes System zur Unterstützung des Fahrers eines Fahrzeugs bei der Erkennung von für das Fahrzeug geeigneten Parklücken umfasst vorzugsweise eine Messeinrichtung zur Erfassung und Vermessung potentieller Parklücken, eine Auswerteeinheit zur Bewertung einer erfassten Parklücke sowie eine Steuerungs- oder Regelungseinheit zur Steuerung oder Regelung des Antriebs eines Fahrzeugs.

Wird das Fahrzeug zum Einparken in eine Parklücke automatisch verzögert, so ist es ferner vorteilhaft, dass automatisch entsprechende optische Signale des Fahrzeugs ausgelöst werden. So wird mit der Bremsung in einer ersten Ausführungsform automatisch ein Bremslicht ausgelöst. In einer weiteren ergänzenden oder alternativen Ausführungsform wird eine Richtungsanzeige, ein sogenannter Blinker, an derjenigen Fahrzeugseite ausgelöst, auf der die zum Einparken geeignete Parklücke erfasst wurde. Der Fahrer muss somit insbesondere nicht noch zusätzlich den Fahrzeugblinker betätigen, um auf ein geplantes Einparken hinzuweisen.

### Zeichnungen

In den Zeichnungen sind Ausführungsbeispiele der Erfindung dargestellt, die in der nachfolgenden Beschreibung näher erläutert werden. Es zeigen:

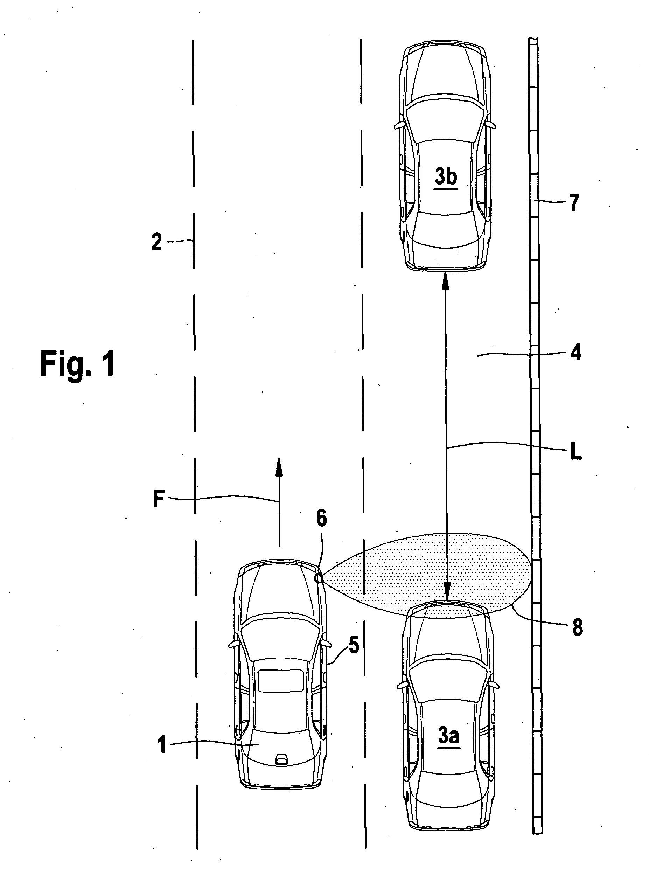

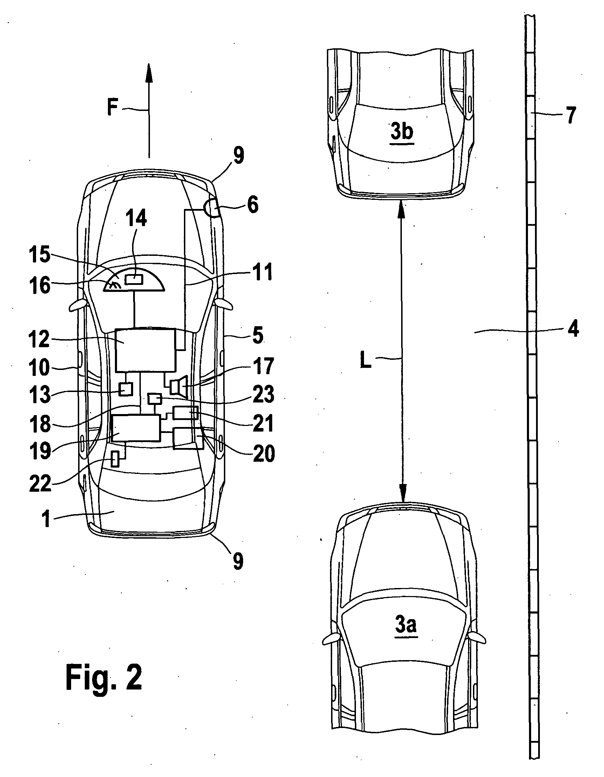

Figur 1 : Eine Schematische Darstellung eines Fahrzeugs, das in Aufsicht vorbeifahrend an einer Parklücke dargestellt ist; und Figur 2: Schematische Darstellung eines erfindungsgemäßen Systems in dem Fahrzeug aus Figur 1.

### Beschreibung der Ausführungsbeispiele

Das erfindungsgemäße Verfahren bzw. das erfindungsgemäße System findet insbesondere bei Kraftfahrzeugen Verwendung. In der Figur 1 ist ein Kraftfahrzeug 1 dargestellt, das sich auf einer Straße 2 in einer durch einen Pfeil dargestellten Fahrtrichtung F bewegt. Zwischen einem am Fahrbahnrand geparkten ersten Fahrzeug 3a und einem zweiten Fahrzeug 3b befindet sich eine Parklücke 4, deren Länge durch den Pfeil L skizziert ist. An der rechten Fahrzeugseite 5 des Kraftfahrzeugs 1 ist ein Abstandssensor 6 angeordnet, der als Messeinheit zur Messung des Abstandes zwischen der rechten Fahrzeugseite 5 und die Parklücke begrenzenden Objekten 3a, 3b und 7 dient. Der Abstandssensor 6 ist hier vorteilhafterweise als Ultraschallsensor ausgeführt, der ein Ultraschallsignal aussendet und das reflektierte Ultraschallsignal wieder empfängt. Aus der Laufzeit des Ultraschallsignals kann ein Abstand des Kraftfahrzeugs 1 zu Hindernissen neben dem Kraftfahrzeug 1, beispielsweise zu dem Bordstein 7, bestimmt werden. Anstelle von Ultraschallsensoren können aber auch Sensoren verwendet werden, die andere Wellensignale aussenden, insbesondere Infrarotwellen oder elektromagnetische Wellen, z. B. Radarwellen.

In dem angegebenen Ausführungsbeispiel ist nur ein Abstandssensor 6 vorgesehen, der einen Strahlkegel 8 in etwa rechtwinklig zur rechten Fahrzeugseite 5 aussendet. Es können jedoch zur Steigerung der Messgenauigkeit auch zwei oder mehr Abstandssensoren an dem Kraftfahrzeug 1 verwendet werden. Neben dem oder statt des in den Figuren 1 und 2 gezeigten Abstandssensors 6 können auch weitere, hier nicht dargestellte Abstandssensoren verwendet werden, die insbesondere auf den Fahrzeugecken 9 so montiert sind, dass ihre Strahlkegel um einen Winkel vorzugsweise von etwa 45° gegen die rechte Fahrzeugseite 5 nach vorne und/oder nach hinten geneigt sind. Für ein Einparken an der linken Fahrzeugseite 10 können dort ergänzend weitere Abstandssensoren angeordnet sein, die hier jedoch ebenfalls nicht zeichnerisch dargestellt sind.

Über Datenleitungen 11 ist der Abstandssensor 6 mit einer Auswerteeinheit 12 verbunden. Die Auswerteeinheit 12 registriert bei der Vorbeifahrt des Kraftfahrzeugs 1 an der Parklücke 4 die von dem Abstandssensor 6 erfassten Messdaten und ordnet diese mittels Wegstreckensignalen einer jeweiligen Position des Kraftfahrzeugs 1 zu. Die Wegstreckensignale werden von einem Wegstreckensensor 13, z. B. einem Raddrehzahlsensor, an die Auswerteeinheit 12 übermittelt.

Die von der Auswerteeinheit 12 ermittelten und ausgewerteten Informationen zu einer geeigneten Parklücke 4 werden dem Fahrer über eine optische Ausgabeeinheit 14 ausgegeben, die hier in ein Kombiinstrument 15 integriert ist, das dem Fahrer eine Vielzahl weiterer Informationen, beispielsweise Skalenanzeigen 16 zur Fahrtgeschwindigkeit und/oder zum Tankfüllstand liefert. Ergänzend ist die Auswerteeinheit 12 noch mit einem Lautsprecher 17 verbunden, über den Informationen zu einer erfassten Parklücke 4 auch akustisch ausgegeben werden können.

Über eine Datenleitung 18 ist die Auswerteeinheit 12 mit einer Steuerungs- und Regelungseinheit 19 verbunden, durch die der Antrieb 20 sowie Bremsmittel 21 des Kraftfahrzeugs 1 steuerbar ist. Zusätzlich ist die Steuerungs- und Regelungseinheit 19 mit einem Taster 22 verbunden, den der Fahrer zur erstmaligen oder erneuten Start einer Parklückensuche betätigen kann. Außerdem ist die Steuerungs- und Regelungseinheit 19 mit einem Geschwindigkeitssensor 23 verbunden, über den sie Informationen über die momentane Fahrtgeschwindigkeit des Kraftfahrzeugs 1 erhält. Die Steuerungs- und Regeleinheit 19 steuert in einer weiteren Ausführungsform auch eine Lichtzeichenanlage des Fahrzeugs, insbesondere einen Blinker an der Fahrzeugseite an, an der der Einparkvorgang erfolgen soll.

Die Arbeitsweise des zuvor beschriebenen Systems zur Durchführung des erfindungsgemäßen Verfahrens wird nachfolgend beschrieben.

Nach Betätigung des Tasters 22 regelt die Steuerungs- und Regelungseinheit 19 den Antrieb 20 sowie die Bremsmittel (21) derart, dass das Kraftfahrzeug 1 auf eine maximal zulässige Parklückensuchgeschwindigkeit gebracht und diese Geschwindigkeit konstant beibehalten wird. Dabei fährt das Kraftfahrzeug 1 an möglichen Parklücken 4 vorbei, die nach ihrer Vermessung in der Auswerteeinheit 12 daraufhin bewertet werden, ob ein Einparken in Abhängigkeit von der ermittelten Länge L der Parklücke 4 und den bekannten Fahrzeugdaten, insbesondere der Fahrzeuglänge und des Fahrzeugwendekreises, möglich ist. Wenn ein Einparken erfolgen kann, wird dem Fahrer in der Ausgabeeinheit 14 durch ein Symbol angezeigt, dass eine geeignete Parklücke 4 gefunden wurde. Gleichzeitig erhält die Steuerungs- und Regelungseinheit 19 ein Signal, damit sie den Antrieb 20 und die Bremsmittel 21 so steuert, dass eine zügige, aber dennoch sichere und komfortable Abbremsung des Kraflfahrzeugs 1 bis zum Stillstand durchgeführt wird. Gemäß der weiteren Ausführungsform wird mit der Verzögerung das bremslicht betätigt un d der Blinker an der jeweiligen Fahrzeugseite in Richtung der Parklücke gesetzt.

Sollte der Fahrer die erfasste und als geeignet bewertete Parklücke 4 nicht für einen Einparkvorgang nutzen wollen, beispielsweise weil sich nicht erkannte kleinere Hindernisse darin befinden, so kann er durch erneute Betätigung des Tasters 22 die Parklückensuche in der beschriebenen Art und Weise fortsetzen.

## Patentansprüche

1. Verfahren zur Unterstützung des Fahrers eines Fahrzeugs (1) bei der Erkennung von für das Fahrzeug (1) geeigneten Parklücken (4), wobei das Verfahren mindestens die folgenden Schritte umfasst:
- mittels einer Messeinheit (6) werden potentielle Parklücken (4) bei einer Vorbeifahrt des Fahrzeugs (1) erfasst,
- die Länge (L) und/oder Tiefe einer erfassten Parklücke (4) wird ermittelt,
- eine erfasste Parklücke (4) wird in Abhängigkeit von der ermittelten Länge (L) und/oder Tiefe daraufhin bewertet, ob ein Einparken des Fahrzeugs (1) in diese erfasste Parklücke (4) möglich ist,
**dadurch gekennzeichnet,**
**dass** der Antrieb (20) und/oder Bremsmittel (21) des Fahrzeugs (1) derart gesteuert oder geregelt werden, dass das Fahrzeug (1) automatisch abgebremst wird, wenn die Bewertung einer erfassten Parklücke (4) ergibt, dass das Fahrzeug (1) in diese Parklücke eingeparkt werden kann.

2. Verfahren nach Anspruch 1, **dadurch gekennzeichnet, dass** das Fahrzeug (1) bis in den Stillstand abgebremst wird.

3. Verfahren nach Anspruch 1 oder 2, **dadurch gekennzeichnet, dass** der Bremsvorgang derart ausgeführt wird, dass die Geschwindigkeit des Fahrzeugs (1) entsprechend eines vorgegebenen Geschwindigkeitsverlaufes verringert wird.

4. Verfahren nach einem der Ansprüche 1 bis 3, **dadurch gekennzeichnet, dass** der Abstand zu möglichen nachfolgenden und/oder vorausfahrenden Fahrzeugen erfasst wird und dass der Bremsvorgang in Abhängigkeit von einem erfassten Abstand ausgeführt wird, wobei das Fahrzeug (1) bei einem größeren Abstand zu einem nachfolgenden Fahrzeug und/oder bei einem geringeren Abstand zu einem vorausfahrenden Fahrzeug stärker abgebremst wird und bei einem geringeren Abstand zu einem nachfolgenden Fahrzeug und/oder bei einem größeren Abstand zu einem vorausfahrenden Fahrzeug schwächer abgebremst wird.

5. Verfahren nach einem der Ansprüche 1 bis 4, **dadurch gekennzeichnet, dass** der Antrieb des Fahrzeugs (1) derart gesteuert wird, dass das Fahrzeug (1) nach einer automatischen Abbremsung wieder beschleunigt wird, wenn ein vom Fahrer einzugebendes Beschleunigungssignal vorliegt, wobei das Fahrzeug (1) vorzugsweise bis zu der Geschwindigkeit beschleunigt wird, die unmittelbar vor der Einleitung der automatischen Abbremsung vorgelegen hat.

6. Verfahren zur Unterstützung des Fahrers eines Fahrzeugs (1) bei der Erkennung von für das Fahrzeug (1) geeigneten Parklücken (4), wobei das Verfahren mindestens die folgenden Schritte umfasst:
- mittels einer Messeinheit (6) werden potentielle Parklücken (4) bei einer Vorbeifahrt des Fahrzeugs (1) erfasst,
- die Länge (L) und/oder Tiefe einer erfassten Parklücke (4) wird ermittelt,
**dadurch gekennzeichnet,**
**dass** der Antrieb (20) und/oder Bremsmittel (21) des Fahrzeugs (1) derart gesteuert oder geregelt werden, dass eine Parklückensuchgeschwindigkeit des Fahrzeugs (1) automatisch konstant gehalten wird, und dass dem Fahrer eine Information zu einer erfassten Parklücke (4) gegeben wird.

7. Verfahren nach Anspruch 6, **dadurch gekennzeichnet, dass** die Parklückensuchgeschwindigkeit des Fahrzeugs (1) automatisch eingestellt wird, wenn ein vom Fahrer einzugebendes Startsignal vorliegt.

8. Verfahren nach einem der Ansprüche 6 oder 7, **dadurch gekennzeichnet, dass** die Parklückensuchgeschwindigkeit wahlweise vorgegeben werden kann.

9. Verfahren nach einem der Ansprüche 6 bis 8, **dadurch gekennzeichnet, dass** der Abstand zu möglichen vorausfahrenden Fahrzeugen oder vor dem Fahrzeug befindlichen Hindernissen erfasst wird und dass die Parklückensuchgeschwindigkeit reduziert wird, wenn ein bestimmter Mindestabstand unterschritten wird.

10. Verfahren nach einem der Ansprüche 6 bis 9, **dadurch gekennzeichnet, dass** eine erfasste Parklücke (4) in Abhängigkeit von der ermittelten Länge (L) und/oder Tiefe daraufhin bewertet wird, ob und/oder wie ein Einparken des Fahrzeugs (1) in diese erfasste Parklücke (4) möglich ist, und dass Informationen zu dem Ergebnis der vorgenommenen Bewertung dieser Parklücke (4) in einer Ausgabeeinheit (14) ausgegeben werden.

11. Verfahren zur Unterstützung des Fahrers eines Fahrzeugs (1) bei der Erkennung von für das Fahrzeug (1) geeigneten Parklücken (4), **dadurch gekennzeichnet, dass** es die Schritte des Verfahrens nach einem der Ansprüche 1 bis 5 in Kombination mit den Schritten des Verfahrens nach einem der Ansprüche 6 bis 10 umfasst.

12. System zur Durchführung des Verfahrens nach einem der Ansprüche 1 bis 5, das eine Messeinrichtung (6), eine Auswerteeinheit (12) zur Bewertung einer erfassten Parklücke (4), sowie Steuerungs- oder Regelungseinheit (19) zur Steuerung oder Regelung des Antriebs (20) und/oder der Bremsmittel (21) eines Fahrzeugs (1) umfasst, wobei zusätzlich ein Mittel vorgesehen ist, mittels dem der Antrieb (20) und/oder Bremsmittel (21) des Fahrzeugs (1) derart gesteuert oder geregelt werden, dass das Fahrzeug (1) automatisch abgebremst wird, wenn die Bewertung einer erfassten Parklücke (4) ergibt, dass das Fahrzeug (1) in diese Parklücke eingeparkt werden kann.

13. System zur Durchführung des Verfahrens nach einem der Ansprüche 6 bis 11, das eine Messeinrichtung (6), eine Auswertungseinheit (12) zur Bewertung einer erfassten Parklücke (4) sowie eine Steuerungs- oder Regelungseinheit (19) zur Steuerung oder Regelung des Antriebs (20) und/oder der Bremsmittel (21) eines Fahrzeugs (1) umfasst, wobei zusätzlich ein Mittel vorgesehen ist, mittels dem der Antrieb (20) und/oder Bremsmittel (21) des Fahrzeugs (1) derart gesteuert oder geregelt werden, dass eine Parklückensuchgeschwindigkeit des Fahrzeugs (1) automatisch konstant gehalten wird, und mittels dem der Fahrer eine Information zu einer erfassten Parklücke (4) gegeben wird.

## Claims

1. Method for assisting the driver of a vehicle (1) in identifying suitable parking spaces (4) for the vehicle (1), wherein the method comprises at least the following steps:
- potential parking spaces (4) are detected by means of a measuring unit (6) as the vehicle (1) drives past,
- the length (L) and/or depth of a detected parking space (4) is determined,
- a detected parking space (4) is evaluated as a function of the determined length (L) and/or depth as to whether it is possible to park the vehicle (1) in this detected parking space (4),
**characterized**
**in that** the drive (20) and/or braking means (21) of the vehicle (1) are/is open-loop or closed-loop controlled in such a way that the vehicle (1) is automatically braked if the evaluation of a detected parking space (4) reveals that the vehicle (1) can be parked in this parking space.

2. Method according to Claim 1, **characterized in that** the vehicle (1) is braked until it reaches a standstill.

3. Method according to Claim 1 or 2, **characterized in that** the braking process is carried out in such a way that the speed of the vehicle (1) is reduced in accordance with a predefined speed profile.

4. Method according to one of Claims 1 to 3, **characterized in that** the distance from possible vehicles travelling behind and/or travelling ahead is detected, and **in that** the braking process is carried out as a function of a detected distance, wherein in the case of a relatively large distance from a vehicle travelling behind and/or in the case of a relatively small distance from a vehicle travelling ahead the vehicle (1) is braked relatively strongly, and in the case of a relatively small distance from a vehicle travelling behind and/or in the case of a relatively large distance from a vehicle travelling ahead the vehicle is braked less strongly.

5. Method according to one of Claims 1 to 4, **characterized in that** the drive of the vehicle (1) is controlled in such a way that after automatic braking the vehicle (1) is accelerated again if an acceleration signal which is to be input by the driver is present, wherein the vehicle (1) is preferably accelerated up to the speed which was present directly before the initiation of the automatic braking.

6. Method for assisting the driver of a vehicle (1) in identifying suitable parking spaces (4) for the vehicle (1), wherein the method comprises at least the following steps:
- potential parking spaces (4) are detected by means of a measuring unit (6) as the vehicle (1) drives past,
- the length (L) and/or depth of a detected parking space (4) is determined,
**characterized**
**in that** the drive (20) and/or braking means (21) of the vehicle (1) are/is open-loop or closed-loop controlled in such a way that a parking-space-searching speed of the vehicle (1) is automatically kept constant, and in that information about a detected parking space (4) is supplied to the driver.

7. Method according to Claim 6, **characterized in that** the parking-space-searching speed of the vehicle (1) is set automatically if a starting signal which is to be input by the driver is present.

8. Method according to one of Claims 6 or 7, **characterized in that** the parking-space-searching speed can be predefined optionally.

9. Method according to one of Claims 6 to 8, **characterized in that** the distance from possible vehicles travelling ahead or from obstacles located in front of the vehicle is detected, and **in that** the parking-space-searching speed is reduced if a specific minimum distance is undershot.

10. Method according to one of Claims 6 to 9, **characterized in that** a detected parking space (4) is evaluated as a function of the determined length (L) and/or depth as to whether and/or how it is possible to park the vehicle (1) in this detected parking space (4), and **in that** information about the result of the performed evaluation of this parking space (4) is output in an output unit (14).

11. Method for assisting the driver of a vehicle (1) in identifying suitable parking spaces (4) for the vehicle (1), **characterized in that** said method comprises the steps of the method according to one of Claims 1 to 5 in combination with the steps of the method according to one of Claims 6 to 10.

12. System for carrying out the method according to one of Claims 1 to 5, which comprises a measuring device (6), an evaluation unit (12) for evaluating a detected parking space (4), as well as an open-loop or closed-loop control unit (19) for open-loop or closed-loop controlling the drive (20) and/or the braking means (21) of a vehicle (1), wherein in addition a means is provided which open-loop or closed-loop controls the drive (20) and/or braking means (21) of the vehicle (1) in such a way that the vehicle (1) is automatically braked if the evaluation of a detected parking space (4) reveals that the vehicle (1) can be parked in this parking space.

13. System for carrying out the method according to one of Claims 6 to 11, which comprises a measuring device (6), an evaluation unit (12) for evaluating a detected parking space (4), and an open-loop or closed-loop control unit (19) for open-loop or closed-loop controlling the drive (20) and/or the braking means (21) of a vehicle (1), wherein in addition a means is provided which open-loop or closed-loop controls the drive (20) and/or braking means (21) of the vehicle (1) in such a way that a parking-space-searching speed of the vehicle (1) is automatically kept constant, and which provides the driver with information about a detected parking space (4).

## Revendications

1. Procédé d'assistance au conducteur d'un véhicule (1) dans la détection d'emplacements de stationnement (4) qui conviennent pour le véhicule (1), le procédé comportant au moins l'une des étapes suivantes :
- des emplacements possibles de stationnement (4) sont détectés au moyen d'au moins une unité de mesure (6) lors du passage du véhicule (1),
- la longueur (L) et/ou la profondeur d'un emplacement de stationnement (4) saisi sont déterminées,
- un emplacement de stationnement (4) saisi est évalué en fonction de la longueur (L) et/ou de la profondeur qui ont été déterminées pour vérifier si le véhicule (1) peut stationner dans l'emplacement de stationnement (4) ainsi détecté,
**caractérisé en ce que**
l'entraînement (20) et/ou les moyens de freinage (21) du véhicule (1) sont commandés ou régulés de telle sorte que le véhicule (1) soit freiné automatiquement lorsque l'évaluation de l'emplacement de stationnement (4) détecté indique que le véhicule (1) peut être stationné dans cet emplacement de stationnement.

2. Procédé selon la revendication 1, **caractérisé en ce que** le véhicule (1) est freiné jusqu'à l'arrêt.

3. Procédé selon les revendications 1 ou 2, **caractérisé en ce que** l'opération de freinage est exécutée de telle sorte que la vitesse du véhicule (1) soit diminuée de manière à correspondre à une évolution prédéterminée de la vitesse.

4. Procédé selon l'une des revendications 1 à 3, **caractérisé en ce que** la distance par rapport à des véhicules qui se déplacent éventuellement à l'arrière ou à l'avant est détectée et **en ce que** l'opération de freinage est exécutée en fonction de la distance saisie, le véhicule (1) étant freiné plus fortement si la distance par rapport à un véhicule suivant est plus importante et/ou si la distance par rapport à un véhicule se déplaçant à l'avant est plus faible, le véhicule étant freiné moins fortement si la distance par rapport à un véhicule suivant est plus petite et/ou si la distance par rapport à un véhicule se déplaçant à l'avant est plus grande.

5. Procédé selon l'une des revendications 1 à 4, **caractérisé en ce que** l'entraînement du véhicule (1) est commandé de telle sorte que le véhicule (1) soit de nouveau accéléré après un freinage automatique si un signal d'accélération est délivré par le conducteur, le véhicule (1) étant accéléré de préférence jusqu'à la vitesse qui prévalait immédiatement avant le lancement du freinage automatique.

6. Procédé d'assistance au conducteur d'un véhicule (1) dans la détection d'emplacements de stationnement (4) qui conviennent pour le véhicule (1), le procédé comportant au moins l'une des étapes suivantes :
- des emplacements possibles de stationnement (4) sont détectés au moyen d'au moins une unité de mesure (6) lors du passage du véhicule (1),
- la longueur (L) et/ou la profondeur d'un emplacement de stationnement (4) saisi sont déterminées,
**caractérisé en ce que**
l'entraînement (20) et/ou le moyen de freinage (21) du véhicule (1) sont commandés ou régulés de telle sorte qu'une vitesse de recherche d'emplacement de stationnement du véhicule (1) soit maintenue constante de manière automatique et **en ce qu'**une information concernant un emplacement de stationnement (4) détecté est délivrée au conducteur.

7. Procédé selon la revendication 6, **caractérisé en ce que** la vitesse de recherche d'emplacement de stationnement du véhicule (1) est établie automatiquement si le conducteur délivre un signal de lancement.

8. Procédé selon l'une des revendications 6 ou 7, **caractérisé en ce que** la vitesse de recherche d'un emplacement de stationnement peut être prédéterminée à volonté.

9. Procédé selon l'une des revendications 6 à 8, **caractérisé en ce que** la distance par rapport à des véhicules se déplaçant éventuellement à l'avant ou par rapport à des obstacles situés en avant du véhicule est détectée et **en ce que** la vitesse de recherche d'un emplacement de stationnement est réduite si une distance minimale définie n'est pas atteinte.

10. Procédé selon l'une des revendications 6 à 9, **caractérisé en ce qu'**un emplacement de stationnement (4) détecté est évalué en fonction de la longueur (L) et/ou de la profondeur qui ont été déterminées pour vérifier si et/ou comment le stationnement du véhicule (1) dans cet emplacement de stationnement (4) qui a été détecté est possible et **en ce que** cette information concernant le résultat de cette évaluation de l'emplacement de stationnement (4) est délivrée dans une unité de sortie (14).

11. Procédé d'assistance au conducteur d'un véhicule (1) dans la détection d'emplacements de stationnement (4) qui conviennent pour le véhicule (1), **caractérisé en ce qu'**il comporte les étapes du procédé selon l'une des revendications 1 à 5 combinées avec les étapes du procédé selon l'une des revendications 6 à 10.

12. Système en vue de l'exécution du procédé selon l'une des revendications 1 à 5, le système présentant
un dispositif de mesure (6), une unité d'évaluation (12) qui évalue un emplacement de stationnement (4) qui a été détecté ainsi qu'une unité de commande ou de régulation (19) qui commande ou régule l'entraînement (20) et/ou les moyens de freinage (21) d'un véhicule (1),
un moyen qui permet de commander ou de réguler l'entraînement (20) et/ou les moyens de freinage (21) du véhicule (1) étant de plus prévu,
le véhicule (1) étant freiné automatiquement si l'évaluation d'un emplacement de stationnement (4) qui a été détecté indique que le véhicule (1) peut être stationné dans cet emplacement de stationnement.

13. Système en vue de l'exécution du procédé selon l'une des revendications 6 à 11, le système présentant
un dispositif de mesure (6), une unité d'évaluation (12) qui évalue un emplacement de stationnement (4) qui a été détecté ainsi qu'une unité de commande ou de régulation (19) qui commande ou régule l'entraînement (20) et/ou les moyens de freinage (21) d'un véhicule (1),
un moyen qui permet de commander ou de réguler l'entraînement (20) et/ou les moyens de freinage (21) du véhicule (1) étant de plus prévu de telle sorte qu'une vitesse de recherche d'emplacement de stationnement du véhicule (1) soit maintenue constante de manière automatique, et permettant de délivrer au conducteur une information concernant un emplacement de stationnement (4) détecté.
